Europäisches Patentamt

(19) European Patent Office

Office européen des brevets

(11) Numéro de publication: **0 008 261**
**B1**

(12)
# FASCICULE DE BREVET EUROPEEN

(45) Date de publication du fascicule du brevet:
04.08.82

(21) Numéro de dépôt: **79400511.6**

(22) Date de dépôt: **19.07.79**

(51) Int. Cl.³: **C 04 B 35/74,** C 04 B 35/62,
F 27 D 1/12

(54) **Blocs à base d'oxydes réfractaires électrofondus armés d'un élément en un matériau d'une conductivité thermique élevée et procédé de fabrication desdits blocs.**

(30) Priorité: **08.08.78 FR 7823340**

(43) Date de publication de la demande:
**20.02.80 Bulletin 80/4**

(45) Mention de la délivrance du brevet:
**04.08.82 Bulletin 82/31**

(84) Etats contractants désignés:
**BE DE FR GB IT LU NL SE**

(56) Documents cités:
**FR-A-1 339 203**
**FR-A-1 396 055**
**FR-A-2 060 764**
**FR-A-2 247 689**

(73) Titulaire: **SOCIETE EUROPEENNE DES PRODUITS REFRACTAIRES, 67, Boulevard du Château, F-92200 Neuilly-sur-Seine (FR)**

(72) Inventeur: **Esnoult, Marc, Chemin de Vaucrose, Petit Gigognan F-84700 Sorgues (FR)**
Inventeur: **Hugues, Jean-Claude, 19, Quartier Saint-Sébastien, F-84250 Le Thor (FR)**

(74) Mandataire: **De Boisse, Louis, 37, Avenue Franklin D. Roosevelt, F-75008 Paris (FR)**

BUNDESDRUCKEREI BERLIN

Blocs à base d'oxydes réfractaires électrofondus armés d'un élément en un matériau
d'une conductivité thermique élevée et procédé de fabrication desdits blocs.

L'invention concerne des blocs à base d'oxydes réfractaires électrofondus armés d'un élément en un matériau d'une conductivité thermique élevée, utiles notamment pour la construction de fours d'aciérie à haute productivité, en particulier pour les parties de ces fours qui ne sont pas en contact prolongé avec le bain liquide métallique.

Depuis plusieurs années, la puissance des fours à arc rapportée à leur capacité, ou puissance spécifique exprimée en puissance nominale K.V.A. de leur transformateur par tonne d'acier liquide, a été en augmentant et dépasse souvent 500 KVA/t (four UHP), la puissance utilisée atteignant même parfois 750 KW/t pendant la période de fusion. Cette évolution entraîne un besoin de méthodes nouvelles de revêtement des parois des fours.

Les zones les plus sollicitées des revêtements de fours à arc, c'est-à-dire la ligne de laitier, le trou de coulée et surtout les parties du mur situées en face des trois électrodes sont actuellement très souvent constituées de blocs réfractaires en magnésie-oxyde de chrome électrofondu. Des blocs de ce genre sont vendus sous la désignation commerciale CORHART C. 104 par la Demanderesse en Europe.

Ces blocs réfractaires électrofondus se présentent sous forme de blocs sciés dans des lingots dont la contraction à la solidification est dispersée à l'état de macroporosité formée de pores d'un diamètre de 1 à 10 mm, leur porosité totale étant de 16 à 20% avec une très faible microporosité, ce qui, en combinaison avec leur très forte cohésion cristalline, les rend supérieurs à d'autres matériaux réfractaires tels que les matériaux réfractaires basiques cuits, ou même à base de grains fondus réagglomérés.

L'utilisation de ces blocs pour réaliser les zones les plus sollicitées des revêtements de fours à arc, en combinaison avec des matériaux réfractaires moins nobles pour réaliser les zones moins sollicitées, permet généralement d'équilibrer le profil d'usure des revêtements pour une large gamme de puissance et de capacité des fours en optimisant la productivité et le coût des matériaux réfractaires.

Lorsque les conditions de service deviennent trop sévères et en particulier quand la puissance spécifique utilisée en période de fusion dépasse 500 KW/t, et qu'il n'existe pas une régulation fiable du flux thermique sur le revêtement, l'utilisation de tels blocs réfractaires ne permet plus d'atteindre des durées de vie en service raisonnables. En effet, particulièrement aux points »chauds« du revêtement, la destruction des blocs réfractaires électrofondus se produit trop rapidement. Cette destruction peut résulter de l'attaque chimique à haute température par les fumées et projections de laitiers, ou de l'écaillage des faces de travail sous l'effet de variations rapides de températures, les deux phénomènes se produisant à des vitesses et dans des proportions variables suivant le mode d'exploitation des fours.

Une solution aux problèmes ci-dessus a consisté à construire des revêtements de fours, exempts de blocs réfractaires, constitués d'éléments métalliques refroidis à l'eau.

Ces revêtements présentent aussi des inconvénients:
— leur installation est coûteuse et leur durée est aussi réduite quand la puissance spécifique utilisée en fusion atteint 750 KW/t;
— ils sont gros consommateurs d'eau pure dont la disponibilité n'est parfois pas assurée et qui peut provoquer de graves explosions en cas de fuite;
— ils augmentent notablement, 10 à 20 KW/t, la consommation d'énergie par rapport aux revêtements précédents, ce qui n'est pas désirable compte-tenu des soucis actuels d'économie d'énergie;
— et surtout, ils ne résolvent pas complètement le problème parce que le risque d'explosions devient trop grand si on les rapproche trop du bain métallique.

On connaît, par ailleurs, par le brevet français n° 2 247 689 des dispositifs refroidisseurs destinés à protéger les revêtements réfractaires de fours. Ces dispositifs refroidisseurs sont des dispositifs permanents (non non consommables) formés d'un métal à haute conductivité thermique qui sont insérés en des points isolés dans des cavités ajustées prévues dans la paroi du four ou enrobés d'un réfractaire moulable sur leur partie tournée vers l'intérieur du four. Il n'est pas question dans ce brevet de noyer les dispositifs refroidisseurs dans un matériau réfractaire à base d'oxydes tandis que ce dernier est à l'état fondu, ni de réaliser des blocs ou briques réfractaires armés d'un élément en acier destinés à constituer la paroi réfractaire elle-même et dont l'élément en acier s'use en même temps que le matériau réfractaire. Il est clair que le réfractaire moulable mentionné par le brevet français n° 2 247 689 à propos du mode de réalisation des figures 4 et 4A est un matériau réfractaire non façonné, tel qu'un ciment ou une pâte plastique. Il faut noter, enfin, que le brevet français n° 2 247 689 ne décrit spécifiquement que des éléments refroidisseurs en cuivre dotés pour la plupart d'un refroidissement par eau sur leur extrados.

Le brevet français n° 2 060 764 décrit, de son côté, des briques réfractaires comportant des insertions métalliques, en particulier en acier inoxydable, de formes diverses destinées à améliorer leur conduction thermique; ce brevet, toutefois, est limité à des briques en matériau réfractaire cuit ou fritté. L'insertion peut être formée à partier d'une poudre ou d'une pâte qui est cuite (ou frittée) avec l'élément moulé (page 2, ligne 32) ou bien être constituée d'un élément préformé que l'on revêt avantageusement d'un matériau à base de silicate, tel qu'un verre phosphate, avant son insertion dans le matériau réfractaire et la cuisson de ce dernier (page 3, lignes 25—37). Il n'est pas question, dans ce brevet, de briques en matériau réfractaire électrofondu.

Enfin, le brevet français 1 396 055 expose que l'idée de mouler un réfractaire fondu autour d'une pièce métallique insérée ne s'est pas révélée satisfaisante car les pièces métalliques insérées des blocs formés de cette façon se sont oxydés d'une manière considérable, ce qui empêche de les souder par la suite, et propose, pour pallier cette difficulté des blocs réfractaires fondus et coulés dans lesquels on prévoit des cavités venues du moulage de ces derniers et dans lesquelles on montre, après le refroidissement des blocs, des griffes d'ancrage métalliques. Apparemment, les difficultés mentionnées concernant l'insertion de pièces métalliques dans un réfractaire fondu résultent vraisemblablement de ce que les pièces insérées étaient de dimensions relativement petites (faible capacité calorifique) d'où une sensibilité à la chaleur certainement plus grande que celle de pièces de taille relativement plus importante comme celles que la présente invention vise à insérer.

La présente invention vise à fournir des blocs réfractaires composites pour le revêtement de fours d'aciérie qui constituent un compromis avantageux entre les solutions de la technique antérieure rappelée ci-dessus.

Plus particulièrement, l'invention concerne un bloc moulé en un matériau réfractaire comprenant en son sein un élément formé d'un matériau présentant une conductivité thermique notablement plus élevée que celle du matériau réfractaire, cet élément étant en acier et s'étandant sur la majeure partie de la longueur du bloc, caractérisé en ce que le matériau réfractaire constituant le bloc est en un matériau réfractaire électrofondu à base d'au moins un oxyde réfractaire et présente une macroporosité moindre qu'un bloc similaire moulé sans introduction de l'élément d'acier, et en ce que l'élément, qui à été introduit dans le matériau réfractaire pendant que ce dernier était à l'état fondu, présente une section transversale de forme et de surface convenables pour conférer au bloc composite une conductivité thermique apparente, entre 500 et 1000°C, d'au moins 9,28 W/(m.K), et débouche du bloc sur l'extrados de delui-ci.

L'invention concerne aussi un procédé de fabrication de ce bloc, caractérisé en ce que

(a) on coule un matériau réfractaire à base d'au moins un oxyde préalablement fondu dans un moule,

(b) on introduit dans le matériau fondu l'élément à noyer de manière qu'il se forme une croûte de matériau réfractaire solidifié sur ledit élément,

(c) on retire l'élément revêtu de ladite croûte du matériau réfractaire,

(d) on répète les étapes (b) et (c) autant de fois qu'il est nécessaire pour enrober l'élément d'une couche solide de matériau réfractaire,

(e) on introduit l'élément revêtu de ladite couche dans le matériau fondu, et

(f) on opère un refroidissement lent jusqu'à la température ambiante du bloc.

Par »longueur du bloc«, on entend le dimension de celui-ci qui sera perpendiculaire au revêtement du four. Par »extrados«, on entend la face du bloc qui sera dirigée vers l'extérieur du four. Inversement, l'intrados sera la face du bloc dirigée vers l'intérieur du four.

Le corps du bloc est constitué, comme indiqué, d'un matériau réfractaire à base d'au moins un oxyde réfractaire. Comme oxydes utilisables, on citera $MgO$, $Cr_2O_3$, $Al_2O_3$, $ZrO_2$, $TiO_2$ et $SiO_2$, seul ou en mélange. Il est à noter que les matériaux réfractaires de ce genre contiendront souvent, en plus des oxydes principaux ci-dessus, de petites quantités d'autres oxydes, tels que des oxydes de métaux alcalins et alcalino-terreux, des oxydes de fer, etc. ..., provenant des matières premières utilisées qui peuvent être, ainsi que cela est bien connu, des oxydes ou des substances (par exemple des carbonates) se transformant en les oxydes désirés par chauffage. Les matériaux connus et ne font pas partie en eux-mêmes de l'invention. Des matériaux utiles dans l'invention sont décrits, à titre d'exemple non limitatif, dans les brevets des E. U. A. N° 2 113 818 et N° 2 599 566 et dans le brevets des E. U. A. N° 1 200 776. Les matériaux utiles ont une conductivité thermique entre 500 et 1000°C comprise entre 3,48 et 11,61 W/(m. K).

L'élément noyé dans le corps du bloc est en acier. De façon générale, l'élément aura une section transversale sensiblement constante et sera sensiblement continu sur toute sa longueur. La forme, en section transversale, de l'élément noyé n'est pas critique, elle peut être, par exemple cruciforme, en H, rectiligne, etc. ... Egalement, il peut y avoir un seul ou plusieurs éléments noyés dans le bloc. Il faut, cependant, que le rapport des sections du corps du bloc et de l'élément noyé, perpendiculairement à la longueur du bloc, c'est-à-dire perpendiculairement au flux thermique, soit tel que la conductivité thermique apparente du bloc composite, entre 500 et 1000°C, soit d'au moins 9,28 W/(m. K), de préférence d'au moins 17,41 W/(m. K).

La fabrication des blocs de l'invention s'effectue en introduisant l'élément à conductivité thermique élevée dans le matériau à base d'oxyde se trouvant à l'état fondu dans son moule.

L'incorporation d'un élément en acier à haute conductivité thermique dans le bloc à base d'oxydes exerce plusieurs effets bénéfiques

— pendant la fabrication du bloc réfractaire, l'insertion de l'élément dans la matière fondue à base d'oxydes a pour effet d'améliorer la structure de ladite matière à base d'oxydes, en particulier de réduire fortement la macroporosité de la matière sans accroissement de la microporosité, ce qui accroît la résistance à la corrosion du bloc réfractaire par des laitiers. Egalement, grâce à sa faculté d'évacuer des calories, il limite la formation de contraintes dans le bloc pendant sa fabrication;

— pendant l'utilisation du bloc réfractaire dans un revêtement de four, de permettre l'évacuation de calories à partir de l'intérieur du bloc, ce qui améliore la tenue de celui-ci en service, et, par conséquent, sa longévité même dans des conditions sévères. Cet effet de refroidissement reste cependant économiquement acceptable;

— également, pendant l'utilisation du bloc dans un revêtement de four, il retient les écailles qui se forment sur la face de travail du bloc. En effet, même si l'élément noyé ne s'étend pas jusqu'à l'intrados du bloc neuf, il se produit, dans les premiers temps de la mise en service du bloc, une attaque chimique et un écaillage qui mettent à nu l'élément noyé, ce dernier freinant alors les phénomènes d'écaillage, les écailles étant retenues par suite de leur emboîtement intime dans l'élément noyé.

La description qui va suivre en regard du dessin annexé, donné à titre d'exemple non limitatif, fera bien comprendre comment l'invention peut être réalisée, les particularités qui ressortent tant du dessin que du texte faisant bien entendu partie de ladite invention.

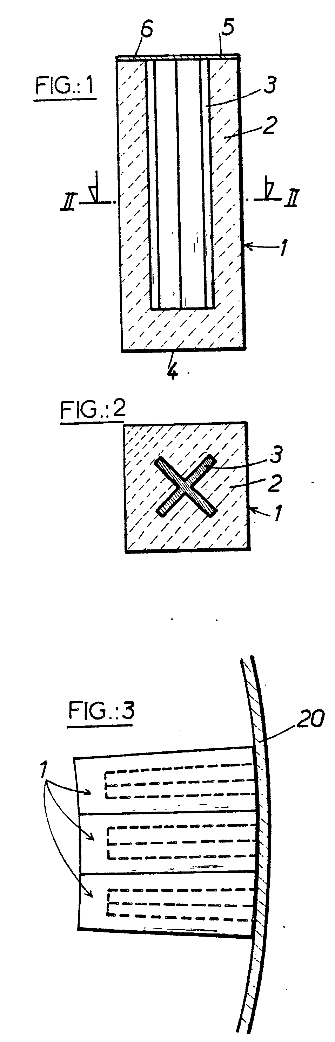

Les figures 1 et 2 sont des vues en élévation et en section transversale, respectivement, d'un mode de réalisation du bloc réfractaire selon l'invention; la figure 3 est une vue en plan illustrant la construction de revêtements de four avec le bloc des figures 1 et 2.

Les figures 1 et 2 montrent un bloc selon l'invention, désigné par la référence générale 1, formé d'un corps 2 à base de magnésie-oxyde de chrome électrofondu, d'une longueur de 350 mm et d'une section de 150 × 130 mm qui contient un élément 3 en acier doux dont la section transversale est en forme de croix dont les branches ont une épaisseur de 10 mm et une longueur de 40 mm. Cet élément s'étend depuis une distance d'environ 20 mm de l'intrados 4 du bloc et débouche du bloc à l'extrados de celui-ci. Comme illustré, une tôle d'acier 6 est soudée à l'élément 3 sur l'extrados du bloc. Cette tôle, bien que non indispensable, est utile pour faciliter le montage du bloc lorsqu'on construit le revêtement du four. La fabrication de ce bloc s'effectue comme suit:

Une composition formée, en poids, de 55% de magnésie marine et 45% de chromite du Transvaal est fondue au four électrique et coulée dans un moule en graphite muni d'un enrobage de poudre d'alumine servant d'isolant thermique. Les dimensions intérieures du moule sont de 150 × 130 × 350 mm. Avant solidification, on plonge dans la masse fondue un élément en acier doux de longueur supérieure à 350 mm en forme de croix, dont les branches ont une épaisseur de 10 mm et une longueur de 40 mm. Une croûte d'oxydes solidifiés se forme sur le métal; l'élément métallique est retiré et réintroduit plusieurs fois dans le bain afin de l'enrober complètement d'une couche solide d'oxydes. Puis il est laissé en place, sa partie supérieure dépassant le haut du bloc. Ensuite, on recouvre le dessus du moule d'alumine en poudre et on laisse le bloc composite se refroidir lentement jusqu'à la température ambiante, de façon à éviter la formation de contraintes, ainsi que cela est usuel dans l'art des réfractaires électrofondus. Une fois complètement refroidi, on extrait le bloc du moule, on coupe la partie saillante de l'élément, puis on soude la tôle 6.

Le corps à base d'oxydes du bloc obtenu a la composition suivante, en poids: 55% MgO, 20,5% $Cr_2O_3$, 12,5% FeO, 7,5% $Al_2O_3$, 2,5% $SiO_2$, 1,5% CaO et 0,5% $TiO_2$. Il présente une masse volumique de 3,6 $g/cm^3$ tandis qu'un bloc classique, sans élément noyé, présente une masse volumique de 3,15 $g/cm^3$. La macroporosité et le microporosité de la partie à base d'oxydes sont très faibles.

La résistance à la corrosion du corps à base d'oxydes par des laitiers est supérieure de 30 à 40% à celle d'un bloc classique. L'usure dans un essai de laboratoire sur le corps à base d'oxydes passe de 8 mm pour un bloc classique à 5,6 mm.

Ce qui précède illustre l'effet bénéfique de l'insertion de l'élément en acier sur la structure du corps à base d'oxydes du bloc obtenu.

En outre, la faculté de l'élément noyé à haute conductivité thermique d'évacuer des calories de l'intérieur du bloc limite la formation de contraintes dans le bloc pendant sa fabrication. Ceci, associé à la plus grande homogénéité de structure, améliore la résistance du bloc réfractaire aux variations de température.

La conductivité thermique apparente du bloc composite est de 9,28 W/(m. K) au lieu de 4,64 W/(m. K) pour un bloc classique, mais en servide, les isothermes sont évidemment déformés au niveau de l'élément métallique.

Si, dans un essai de laboratoire consistant à construire un mur formé de blocs selon l'invention et de blocs classiques (sans élément à haute conductivité thermique) de même compositions et à soumettre l'intrados de ces blocs à des variations de températures entre 1300 et 1700°C pendant que l'extrados des blocs est refroidi par une circulation d'air, on compare le comportement des blocs de l'invention et des blocs classiques servant de témoins, on constate:

— que la croix d'acier est fondue sur une profondeur très inférieure à celle qui correspond normalement à son isotherme de fusion dans le bloc classique, donc que l'intrados de la croix a été refroidi par rapport à la température imposée à l'intrados des blocs réfractaires;

— que les écailles sont moins nombreuses sur le corps à base d'oxydes des blocs de l'invention que sur les blocs témoins.

En outre, ces écailles sont retenues par leur emboîtement intime dans la croix métallique.

En conclusion, et comme le confirme un résultat en mur de four industriel, l'élément métallique a:

— amélioré la résistance à la corrosion chimique du corps à base d'oxydes par action sur sa masse volumique et sa structure, et par refroidissement de son intrados;

— diminué sa fissuration et retenu les écailles qui se sont formées.

De son côté, le corps à base d'oxydes a amélioré la réfractarité moyenne du bloc en limitant les risques liés à la fusion prématurée de l'acier, et diminué les pertes thermiques dans le revêtement. L'utilisation de ce type de blocs est conseillée dans des fours UHP de puissance spécifique installée inférieure à 600 KVA/t.

La figure 3 illustre la réalisation d'un mur de four à l'aide de blocs du type de ceux des figures 1 et 2.

Comme on le voit, les blocs 1 sont simplement juxtaposés les uns à côté des autres, avec leur intrados 4 tourné vers l'intérieur du four. Les tôles 6 de chaque bloc sont soudées à la tôle 20 du four refroidie artificiellement, par exemple par une circulation d'eau ou d'air, ou par convection naturelle.

Il va de soi que le mode de réalisation décrit n'est qu'un exemple et qu'il serait possible de le modifier, notamment par substitution d'équivalents techniques, sans sortir pour cela du cadre de l'invention.

Il est à noter, en particulier, que l'utilité des blocs composites de l'invention n'est pas limitée à la construction de fours d'aciérie, ces blocs pouvant être employés chaque fois que leur capacité d'évacuer des calories à partir de l'intérieur des blocs peut s'avérer intéressante.

## Revendications

1. Bloc moulé en un matériau réfractaire comprenant en son sein un élément formé d'un matériau présentant une conductivité thermique notablement plus élevée que celle du matériau réfractaire, cet élément étant en acier et s'étendant sur la majeure partie de la longueur du bloc, caractérisé en ce que le matériau réfractaire constituant le bloc est en un matériau réfractaire électrofondu à base d'au moins un oxyde réfractaire et présente une macroporosité moindre qu'un bloc similaire moulé sans introduction de l'élément d'acier, et en ce que l'élément, qui a été introduit dans le matériau réfractaire pendant que ce dernier était à l'état fondu, présente une section transversale de forme et de surface convenables pour conférer au bloc composite une conductivité thermique apparente, entre 500 et 1000°C, d'au moins 9,28 W/(m. K), et débouche du bloc sur l'extrados de delui-ci.

2. Bloc selon la revendication 1, caractérisé en ce que le matériau réfractaire électrofondu est à base d'au moins un oxyde choisi parmi MgO, $Cr_2O_3$, $Al_2O_3$, $ZrO_2$, $TiO_2$, $SiO_2$, et leurs mélanges.

3. Bloc selon la revendication 1 ou 2, caractérisé en ce que sa conductivité thermique apparente est d'au moins 17,41 W/(m. K).

4. Bloc selon l'une quelconque des revendications 1 à 3, caractérisé en ce que l'élément noyé présente, en section transversale, une forme cruciforme ou en H.

5. Procédé de fabrication d'un bloc tel que défini à la revendication 1, caractérisé en ce que
(a) on coule un matériau réfractaire à base d'au moins un oxyde préalablement fondu dans un moule,
(b) on introduit dans le matériau fondu l'élément à noyer de manière qu'il se forme une croûte de matériau réfractaire solidifié sur ledit élément,
(c) on retire l'élément revêtu de ladite croûte du metériau réfractaire,
(d) on répète les étapes (b) et (c) autant de fois qu'il est nécessaire pour enrober l'élément d'une couche solide de matériau réfractaire,
(e) on introduit l'élément revêtu de ladite couche dans le matériau fondu, et
(f) on opère un refroidissement lent jusqu'à la température ambiante du bloc.

## Patentansprüche

1. Gegossener Block aus feuerfestem Material, in dessen Innerem sich ein Element befindet, das aus einem Material besteht, das eine wesentlich größere Wärmeleitfähigkeit hat als das feuerfeste Material, wobei das Element aus Stahl besteht und sich über den größeren Teil der Länge des Blockes erstreckt, dadurch gekennzeichnet, daß das den Block bildende feuerfeste Material ein elektrisch erschmolzenes feuerfestes Material auf der Basis wenigstens eines feuerfesten Oxides ist und eine geringere Makroporosität aufweist als ein gleichartiger Block, der ohne Einführung des aus Stahl bestehenden Elementes gegossen ist und daß das Element, das in das feuerfeste Material eingeführt wurde, während sich dieses in geschmolzenem Zustand befand, einen Querschnitt von solcher Form und Größe hat, daß dem Block insgesamt eine effektive Wärmeleitfähigkeit verliehen wird, die im Bereich zwischen 500 und 1000°C mindestens 9,28 W/(m. °K) beträgt, wobei das Element an der äußeren Wölbfläche des Blockes aus diesem ausmündet.

2. Block nach Anspruch 1, dadurch gekennzeichnet, daß das elektrisch erschmolzene feuerfeste Material eine Basis aus mindestens einem Oxid aufweist, das aus MgO, $Cr_2O_3$, $Al_2O_3$, $ZrO_2$, $TiO_2$, $SiO_2$ und deren Mischungen ausgewählt ist.

3. Block nach einem der Ansprüche 1 und 2, dadurch gekennzeichnet, daß seine effektive Wärmeleitfähigkeit mindestens 17,41 W/(m.°K) ist.

4. Block nach einem der Ansprüche 1 bis 3, dadurch gekennzeichnet, daß das eingebettete Element einen kreuzförmigen oder H-förmigen Querschnitt aufweist.

5. Verfahren zur Herstellung eines Blockes gemäß Anspruch 1, gekennzeichnet durch folgende Verfahrensschritte:
a) Eingießen eines feuerfesten Materials auf der Basis wenigstens eines zuvor geschmolzenen Oxides in eine Form,
b) Eintauchen des einzubettenden Elementes in das geschmolzene Material derart, daß sich auf dem Element eine Kruste aus erstarrtem feuerfestem Material bildet,
c) Herausziehen des mit der Kruste aus feuerfestem Material überzogenen Elementes,
d) Wiederholen der Verfahrensschritte (b) und (c) so oft, wie es nötig ist, um das Element mit einer festen Schicht aus feuerfestem Material zu umkleiden,
e) Eintauchen des mit der genannten Schicht aus feuerfestem Material bedeckten Elementes in das geschmolzene Material,
f) langsames Abkühlen des Blockes auf die Umgebungstemperatur.

**Claims**

1. Molded block of a refractory material having, embedded therein, a member of a material having a thermal conductivity which is markedly higher than that of said refractory material, said member being made of steel and extending over the greater part of the length of the block, characterized in that the refractory material of said block is a fused cast refractory material based on at least one refractory oxide and exhibits a macroporosity lesser than that of a similar block molded without introducing the steel member, and in that said member, which has been introduced in the refractory material which this latter was in the molten state, presents a cross-section having a shape and an area suitable for confering to the composite block an apparent thermal conductivity, between 500 and 1000°C, of at least 9,28 W/(m.°K), and emerges from the block on the outer face thereof.

2. Block according to Claim 1, characterized in that the fused cast refractory material is based on at least one oxide selected among MgO, $Cr_2O_3$, $Al_2O_3$, $ZrO_2$, $TiO_2$, $SiO_2$ and mixtures thereof.

3. Block according to Claim 1 or 2, characterized in that it has an apparent thermal conductivity of a least 17,41 W/(m.°K).

4. Block according to any of Claims 1 to 3, characterized in that the embedded member has a cruciform or H-shaped cross-section.

5. Process for manufacturing a block according to Claim 1, characterized in that
(a) a pre-melted refractory material based on at least one oxide is cast in a mold,
(b) the member to be embedded is introduced into the molten material in such a way that a crust of solidified refractory material forms on said member,
(c) the member coated with said crust of refractory material is withdrawn,
(d) the steps (b) and (c) are repeated as many times as necessary for coating the member with a solid layer of refractory material,
(e) the member coated with said layer is introduced into the molten material, and
(f) the block is slowly cooled to ambient temperature.

FIG.: 1

FIG.: 2

FIG.: 3